# EUROPÄISCHE PATENTSCHRIFT

(11) **EP 2 082 935 B1**
(45) Veröffentlichungstag und Bekanntmachung des Hinweises auf die Patenterteilung: **14.03.2018**
(21) Anmeldenummer: 09000126.4
(22) Anmeldetag: 08.01.2009
(51) Int. Cl.: B60T 13/26, B60T 7/20, B60T 15/18

(54) **Bremseinrichtung eines wenigstens zweiachsigen, eine gelenkte Vorderachse aufweisenden Anhängerfahrzeugs einer Zugfahrzeug-Anhängerkombination**
Brake device for a trailer vehicle with a steered front axle and at least two axles for a pulling vehicle trailer combination
Dispositif de freinage d'une remorque ayant au moins deux axes et comprenant un axe avant articulé d'une combinaison de remorque de véhicule de traction

(30) Priorität: 08.01.2008 DE 102008003525
(43) Veröffentlichungstag der Anmeldung: 29.07.2009
(73) Patentinhaber: KNORR-BREMSE Systeme für Nutzfahrzeuge GmbH, 80809 München (DE)
(72) Erfinder: Pahl, Stefan, 82256 Fürstenfeldbruck (DE); Voith, András, 1183 Budapest (HU); Tóth, János, 6000 Kecskemét (HU); Mihalyi, Attila, 5100 Jászberény (HU); Muser, Michael, 85276 Pfaffenhofen (DE); Kantor, Kornél, 6000 Kecskemét (HU)
(74) Vertreter: Mattusch, Gundula

(56) Entgegenhaltungen:
- WO-A1-03/066402

## Beschreibung

### Stand der Technik

Die Erfindung geht aus von einer pneumatischen Bremseinrichtung eines wenigstens zweiachsigen, eine gelenkte Vorderachse aufweisenden Anhängerfahrzeugs einer Zugfahrzeug-Anhängerkombination mit einer ersten Ventileinrichtung zur Steuerung einer passiven Bremse an einer Hinterachse des Anhängerfahrzeugs und mit einer zweiten Ventileinrichtung zur Steuerung einer aktiven Bremse an einer Vorderachse oder Vorderachsgruppe des Anhängerfahrzeugs, gemäß dem Oberbegriff von Anspruch 1.

In wenigstens zweiachsigen, einen Drehschemel für die Vorderachse oder Vorderachsgruppe aufweisenden Anhängerfahrzeugen von Zugfahrzeug-Anhängerkombinationen werden üblicherweise sog. Kombizylinder an der Hinterachse oder an Hinterachsen als Bremszylinder verwendet, welche einerseits einen Betriebsbremszylinder als aktive Betriebsbremse beinhalten, welcher zum Bremszuspannen belüftet und zum Bremslösen entlüftet wird, und andererseits einen Federspeicherbremszylinder als passive Parkbremse, welcher zum Bremszuspannen entlüftet und zum Bremslösen belüftet wird. Andererseits sind der mit dem Drehschemel verbundenen oder sonst lenkbaren Vorderachse in der Regel lediglich aktive Betriebsbremszylinder zugeordnet, welche zugleich als Betriebsbremse und als additionale oder zusätzliche Feststellbremse genutzt werden. Solche aktiven Betriebsbremszylinder werden zum Lösen entlüftet und zum Zuspannen belüftet.

Aus dem Stand der Technik ist eine gattungsgemäße Feststellbremseinrichtung eines Anhängerfahrzeugs einer Zugfahrzeug-Anhängerkombination bekannt, mit welcher beim Parken bei am Kupplungskopf noch angekuppeltem Anhängerfahrzeug die Federspeicherbremszylinder der Kombizylinder der Hinterachse(n) entlüftet werden können, damit die Federspeicherbremse der Hinterachse(n) zuspannt und die Betriebsbremszylinder der Vorderachse belüftet werden können, damit die Betriebsbremse der Vorderachse zuspannt ("Parking-Funktion"), womit eine additionale oder zusätzliche Bremswirkung hervorgerufen wird, weil die Vorderachse(n) mitgebremst und somit eine Bewegung der Vorderachse(n) sowie des Drehschemels verhindert wird.

Andererseits fordert der Gesetzgeber, dass bei einem Abriss der Druckluftversorgung des Anhängerfahrzeugs die Federspeicherbremse automatisch zuspannt ("Abriss-Funktion"). Diese Funktion ist ebenfalls in die bekannte Feststellbremseinrichtung integriert. Bei bekannten Bremseinrichtungen wird im Rahmen der Abriss-Funktion die Vorderachse nicht automatisch eingebremst, jedoch sind Lösungen bekannt, bei welchen die Vorderachsbremse bei Betätigung einer separaten Schaltvorrichtung aktiviert werden kann.

Diese Abriss-Funktion muss außer Betrieb gesetzt werden können, wenn der Anhänger in abgekuppeltem Zustand von einem Fahrzeug ohne Druckluftversorgung rangiert werden soll. Diese sog. "Shunting-Funktion" wird beim Stand der Technik ebenfalls von der Feststellbremseinrichtung ausgeführt und ist beispielsweise dann wünschenswert, wenn das abgestellte und über die Federspeicherbremsen eingebremste Anhängerfahrzeug durch ein Fahrzeug ohne Druckluftversorgung, beispielsweise durch einen Gabelstapler zu verfahren bzw. zu rangieren und dazu die Feststellbremsen des Anhängerfahrzeugs gelöst werden müssen.

Nicht zuletzt muss zum Ankuppeln des an der Hinterachse durch die Federspeicherbremse eingebremsten Anhängerfahrzeugs an das Zugfahrzeug der Drehschemel drehbar und folglich die Bremse an der Vorderachse in Gestalt von aktiven Betriebsbremszylindern gelöst sein ("Ankuppel-Funktion").

Allgemein müssen daher durch eine solche Feststellbremseinrichtung eines zweiachsigen Anhängerfahrzeugs einer Zugfahrzeug-Anhängerkombination mindestens die folgenden Funktionen ausgeführt werden können:
a) Die Abriss-Funktion, gemäß welcher im Falle einer unterbrochenen oder gestörten Druckluftverbindung zwischen dem Zugfahrzeug und dem Anhängerfahrzeug Letzteres automatisch eingebremst wird,
b) die Shunting- oder Rangierfunktion, gemäß welcher abhängig von wenigstens einem durch ein Handbetätigungsorgan erzeugtes externes Signal bei einer unterbrochenen Druckluftverbindung zwischen dem Zugfahrzeug und dem Anhängerfahrzeug die Bremsen des Anhängerfahrzeugs mittels des Vorratsdrucks eines anhängerfahrzeugseitigen Druckluftvorrats gelöst werden,
c) die Parking-Funktion, gemäß welcher abhängig von wenigstens einem durch ein Handbetätigungsorgan erzeugtes weiteres externes Signal bei an das Zugfahrzeug angekuppeltem Anhängerfahrzeug die Feststellbremse zugespannt wird,
d) die Ankuppel-Funktion, gemäß welcher abhängig von wenigstens einem durch ein Handbetätigungsorgan erzeugtes externes Signal die Feststellbremsen der Hinterachse zugespannt und die Bremsen der Vorderachse gelöst sind, um den mit der Vorderachse verbundenen Drehschemel zum Ankuppeln drehen zu können.

Selbstverständlich muss auch eine Fahr-Funktion realisiert werden können, bei welcher die Bremsen des Anhängerfahrzeugs gelöst sind. Beim einem von der Anmelderin auf den Markt gebrachten Feststellbremseinrichtung ist die zweite, der Vorderachse mit der aktiven Betriebsbremse zugeordnete Ventileinrichtung durch Handbetätigungsmittel steuerbar. Dies erfordert jedoch einen relativ hohen Bauaufwand und birgt die Gefahr von Fehlbedienungen in sich.

Der Erfindung liegt demgegenüber die Aufgabe zugrunde, eine Feststellbremseinrichtung der eingangs erwähnten Art derart weiter zu bilden, dass die oben erwähnten Nachteile vermieden werden.

Erfindungsgemäß wird diese Aufgabe durch die Merkmale des Patentanspruchs 1 gelöst.

### Offenbarung der Erfindung

Die Erfindung schlägt vor, dass die zweite Ventileinrichtung ausschließlich durch pneumatische, wenigstens teilweise von der ersten Ventileinrichtung ausgesteuerte Signale gesteuert wird. Mit anderen Worten erfolgt die Steuerung der der Vorderachse zugeordneten Ventileinrichtung automatisch und gekoppelt an die Funktion der Feststellbremse der Hinterachse, ohne Eingriffszwang oder Eingriffsmöglichkeit von außen.

Dies bringt den Vorteil mit sich, dass nun mangels händischer Steuerung eine Fehlbedienung der Bremse der Vorderachse(n) im Rahmen der genannten Abriss- oder Abkuppelfunktionen ausgeschlossen werden kann und durch die automatische Mitbremsung der Vorderachse(n) die Gesamtbremswirkung erhöht wird. Mithin ist die Steuerung der Funktion der Bremse der Vorderachse an die Funktion der Bremse der Hinterachse gekoppelt, so dass sich auch keine ungewollten Bremskonstellationen bei Vorder- und Hinterachse ergeben können. Nicht zuletzt sinkt wegen der automatischen Steuerung der zweiten Ventileinrichtung und damit der Bremsen der Vorderachse der Bauaufwand.

Durch die in den Unteransprüchen aufgeführten Maßnahmen sind vorteilhafte Weiterbildungen und Verbesserungen der im unabhängigen Anspruch angegebenen Erfindung möglich.

Besonders bevorzugt werden die von der ersten Ventileinrichtung ausgesteuerten pneumatischen Signale in wenigstens einen pneumatischen Steuereingang eines Ventils und in wenigstens einen pneumatischen Steuereingang eines weiteren Ventils der zweiten Ventileinrichtung eingesteuert.

Insbesondere ist die zweite Ventileinrichtung derart ausgebildet ist, dass sie abhängig von den an seinen Steuereingängen anstehenden Steuerdrücken
a) für Betriebsbremsungen bei am Zugfahrzeug angekuppeltem Anhänger angesteuert vom Zugfahrzeug einen Kupplungskopf "Bremse" mit dem wenigstens einen Betriebsbremszylinder für die Betriebsbremse an der Vorderachse des Anhängers verbindet,
b) bei einem Druckverlust am Kupplungskopf "Vorrat" den wenigstens einen Betriebsbremszylinder an der Vorderachse mit dem anhängerfahrzeugseitigen Druckluftvorrat verbindet,
c) zum Ankuppeln des Anhängers an das Zugfahrzeug den wenigstens einen Betriebsbremszylinder an der Vorderachse mit einer Drucksenke in Verbindung bringt,
d) zum Rangieren des vom Zugfahrzeug abgekuppelten Anhängers den wenigstens einen Betriebsbremszylinder an der Vorderachse mit dem Kupplungskopf "Bremse" verbindet und dadurch entlüftet.

Gemäß einer bevorzugten Ausführungsform ist das eine Ventil und das weitere Ventil der zweiten Ventileinrichtung jeweils ein gegen eine Federbelastung druckgesteuertes 3/2-Wegeventil.

Alternativ kann das eine Ventil und das weitere Ventil der zweiten Ventileinrichtung jeweils ein 3/2-Wegeventil sein, welches einen weiteren Steuereingang aufweist, wobei der an dem weiteren Steuereingang anstehende Druck gegen den an dem einen Steuereingang anstehenden Druck wirkt.

Genaueres geht aus der folgenden Beschreibung eines Ausführungsbeispiels hervor.

### Zeichnungen

Ein Ausführungsbeispiel der Erfindung ist in der Zeichnung dargestellt und in der nachfolgenden Beschreibung näher erläutert. In der Zeichnung zeigt
- Fig.1: einen schematischen Schaltplan einer Bremseinrichtung gemäß einer bevorzugten Ausführungsform der Erfindung;
- Fig.2: einen schematischen Schaltplan einer Bremseinrichtung gemäß einer weiteren Ausführungsform der Erfindung.

### Beschreibung des Ausführungsbeispiels

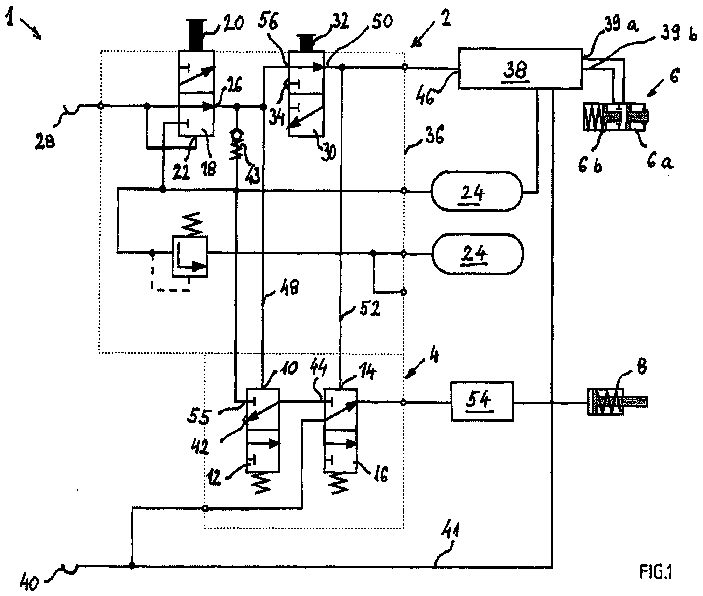

Bei dem in Fig.1 gezeigten bevorzugten Ausführungsbeispiel einer erfindungsgemäßen Bremseinrichtung 1 eines wenigstens zweiachsigen, eine gelenkte Vorderachse aufweisenden Anhängerfahrzeugs einer Zugfahrzeug-Anhängerkombination ist eine erste Ventileinrichtung 2 zur Steuerung wenigstens einer passiven Bremse 6 an einer Hinterachse des Anhängerfahrzeugs und beispielsweise eine hiervon separate und getrennte zweite Ventileinrichtung 4 zur Steuerung einer aktiven Bremse 8 an einer Vorderachse des Anhängerfahrzeugs vorgesehen.

An der Hinterachse wird ein bevorzugt ein Kombizylinder 6 verwendet, welcher einerseits einen Betriebsbremszylinder 6a als aktive Betriebsbremse beinhaltet, welcher zum Bremszuspannen belüftet und zum Bremslösen entlüftet wird, und andererseits einen Federspeicherbremszylinder 6b mit Speicherfeder als passive Park- oder Feststellbremse, welcher zum Bremszuspannen entlüftet und zum Bremslösen belüftet wird. Dabei sind der Betriebsbremszylinder und der Federspeicherbremszylinder 6 hintereinander in Reihe angeordnet. Der Aufbau eines solchen Kombizylinders ist hinlänglich bekannt, beispielsweise aus der DE 29 23 359 C2. Deshalb soll hier nicht weiter darauf eingegangen werden.

An der Vorderachse sind lediglich Betriebsbremszylinder 8 als aktive Betriebsbremse vorhanden, die zum Bremszuspannen belüftet und zum Bremslösen entlüftet wird. Die Betriebsbremse der Vorderachse dient hier als Zusatzbremse zu einer Feststellbremse, welche hier beispielsweise mechanisch betätigt wird.

Die von der ersten Ventileinrichtung 2 ausgesteuerten pneumatischen Signale werden in wenigstens einen pneumatischen Steuereingang 10 eines Ventils 12 und in wenigstens einen pneumatischen Steuereingang 14 eines weiteren Ventils 16 der zweiten Ventileinrichtung 4 eingesteuert.

Die erste Ventileinrichtung 2 beinhaltet als sog. Shunting-Ventil 18 ein 3/2-Wegeventil zur Ausführung der Shunting-Funktion, das abhängig von einem durch ein Handbetätigungsorgan, vorzugsweise durch einen Schalter 20 erzeugtes externes Signal und einem an einem pneumatischen Steuereingang 22 anstehenden Druck entweder seinen Ausgang 26 und den Steuereingang 10 des einen Ventils 12 der zweiten Ventileinrichtung mit einem Kupplungskopf "Vorrat" 28 des Anhängerfahrzeugs verbindet oder den Vorratsdruck eines anhängerfahrzeugseitigen Druckluftvorrats 24 an seinen Ausgang 26 und an den Steuereingang 10 des einen Ventils 10 der zweiten Ventileinrichtung 4 durchsteuert. Der Steuereingang 22 des Shunting-Ventils 18 steht mit dem Kupplungskopf "Vorrat" 28 in Verbindung.

Drüber hinaus beinhaltet die erste Ventileinrichtung 2 weiterhin als sog. Parking-Ventil 30 zum Ausführen der Parking-Funktion wenigstens ein weiteres 3/2-Wegeventil, das abhängig von einem durch ein Handbetätigungsorgan, beispielsweise wiederum durch einen Schalter 32 erzeugtes weiteres externes Signal den Steuereingang 14 des weiteren Ventils 16 der zweiten Ventileinrichtung 4 mit einer Entlüftung 34 oder diesen Steuereingang 14 mit dem Eingang 56 des Parking-Ventils 30 bzw. mit dem Ausgang 26 des Shunting-Ventils 18 verbindet.

Das Parking-Ventil 30 ist beispielsweise als Rast- oder Feststellventil ausgebildet, derart, dass es sich in seiner jeweils eingestellten Schaltstellung feststellt und erst durch eine entsprechende Betätigung des Schalters 32 umgeschaltet werden kann.

Das Shunting-Ventil 18 und das Parking-Ventil 30 sind bevorzugt in eine Baueinheit integriert, beispielsweise durch Unterbringung der beiden 3/2-Wegeventile 18, 30 in einem gemeinsamen, von außen her gut zugängigen Gehäuse oder Baueinheit 36, damit die Schalter 20, 32 durch eine Bedienperson von außen betätigt werden können. Über entsprechende Anschlüsse und Druckluftleitungen steht diese Baueinheit 36 mit wenigstens einem Druckluftvorrat 24, einem Druckregelmodul 38 für die Hinterachse sowie mit dem Kupplungskopf "Vorrat" 28 in Verbindung.

Der Ausgang 26 des Shunting-Ventils 18 ist weiterhin über das Rückschlagventil 43 mit dem Druckluftvorrat 24 verbunden, wodurch der Druckluftvorrat 24 mit Druckluft befüllt werden kann.

Das Druckregelmodul 38 ist beispielsweise elektro-pneumatisch und bildet eine Steuerventileinrichtung für die Betriebsbremse und für die Parkbremse der Hinterachse (Federspeicherbremszylinder des Kombizylinders), welche den Betriebsbremsdruck für die Betriebsbremse der Hinterachse abhängig von einem durch den Fahrer des Zugfahrzeugs ausgelöstes und über den Kupplungskopf "Bremse" 40 und eine daran angekoppelte Bremsleitung 41 pneumatisch sowie über einen hier nicht gezeigten Datenbus in das Druckregelmodul 38 des Anhängerfahrzeugs eingesteuertes Betriebsbremsanforderungssignal erzeugt. Das Druckregelmodul 38 beinhaltet für die Hauptfunktion "Betriebsbremsung" in bekannter Weise eine es steuernde elektronische Steuereinrichtung, ein Backup-Ventil, ein Einlassventil sowie ein Auslassventil. Diese Ventile steuern wiederum ein Relaisventil an, das abhängig von einem an seinem Steuereingang anstehenden Steuerdruck einen Betriebsbremsdruck an seinen mit einem Betriebsbremsanschluss 39a für den Betriebsbremszylinder 6a in Verbindung stehenden Ausgang aussteuert bzw. diesen Betriebsbremsanschluss 39a mit einem Entlüftungsanschluss verbindet.

Ein die eingangs erwähnte Abriss-Funktion ausführendes, hier nicht explizit gezeigtes Ventil ist separat angeordnet, in das Gehäuse 36 oder bevorzugt in das Druckregelmodul 38 integriert, beispielsweise durch Unterbringung dieses Ventils in einem gemeinsamen Gehäuse mit den weiteren Ventilen und der elektronischen Steuereinrichtung, und steht über entsprechende Anschlüsse und Druckluftleitungen einerseits mit der ersten Ventileinrichtung 2 und dadurch mit dem Kupplungskopf "Vorrat" 28, andererseits mit dem Federspeicherbremszylinder 6 des Kombizylinders in Verbindung.

Die zweite Ventileinrichtung 4 ist derart ausgebildet, dass sie abhängig von den an seinen Steuereingängen 10, 14 anstehenden Steuerdrücken
- für Betriebsbremsungen bei am Zugfahrzeug angekuppeltem Anhänger angesteuert vom Zugfahrzeug den Kupplungskopf "Bremse" 40 mit dem wenigstens einen Betriebsbremszylinder 8 für die Betriebsbremse an der Vorderachse des Anhängers verbindet,
- bei einem Druckverlust am Kupplungskopf "Vorrat" 28 den wenigstens einen Betriebsbremszylinder 8 an der Vorderachse mit dem anhängerfahrzeugseitigen Druckluftvorrat 24 verbindet, und
- zum Ankuppeln des Anhängers an das Zugfahrzeug den wenigstens einen Betriebsbremszylinder 8 an der Vorderachse mit einer Drucksenke 42 in Verbindung bringt,
- zum Rangieren des vom Zugfahrzeug abgekuppelten Anhängers den wenigstens einen Betriebsbremszylinder 8 an der Vorderachse mit dem Kupplungskopf "Bremse" 40 verbindet und dadurch entlüftet.

Das eine Ventil 12 und das weitere Ventil 16 der zweiten Ventileinrichtung 4 ist bevorzugt jeweils ein gegen eine Federbelastung druckgesteuertes 3/2-Wegeventil.

Das eine 3/2-Wegeventil 12 der zweiten Ventileinrichtung 4 verbindet abhängig von dem an seinem Steuereingang 10 anstehenden Druck entweder über das Rückschlagventil 43 den Ausgang 26 des Shunting-Ventils 18 der ersten Ventileinrichtung 2 und direkt den anhängerseitigen Druckluftvorrat 24 mit einem Eingang 44 des weiteren 3/2-Wegeventils 16 der zweiten Ventileinrichtung 4 oder diesen Eingang 44 oder diesen Eingang 44 mit seiner Entlüftung 42. Der Ausgang 26 des Shunting-Ventils 18 steht weiterhin über ein Rückschlagventil 43 mit dem anhängerseitigen Druckluftvorrat 24 und dadurch oder parallel dazu mit einem Eingang 55 des einen 3/2-Wegeventils 12 der zweiten Ventileinrichtung 4 in Verbindung.

Im weiteren verbindet das weitere 3/2-Wegeventil 16 der zweiten Ventileinrichtung 4 abhängig von dem an seinem Steuereingang 14 anstehenden Druck entweder seinen Eingang 44 mit dem Betriebsbremszylinder 8 an der Vorderachse oder diesen Betriebsbremszylinder 8 mit dem Kupplungskopf "Bremse" 40 des Anhängerfahrzeugs.

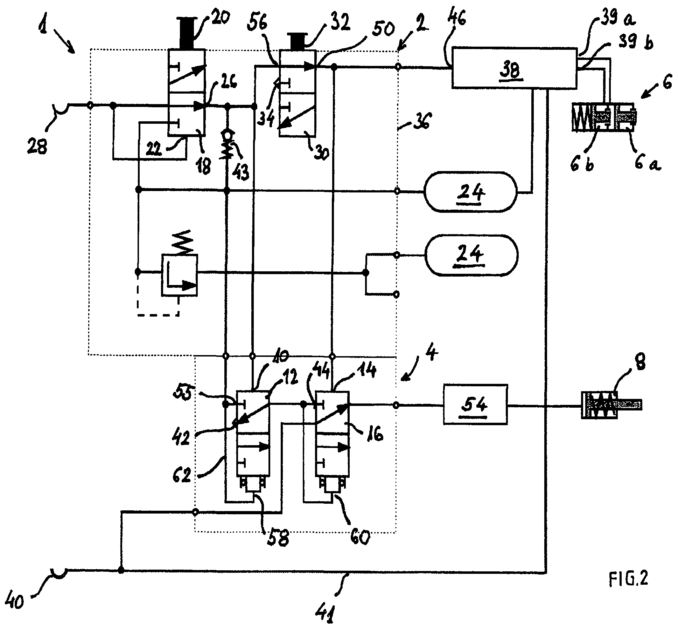

Die zweite Ventileinrichtung 4 kann auch separat eingebaut und mit Leitungen an die Ventileinrichtung 2 und an den Druckluftvorrat 24 angebunden werden, aber bevorzugt ist sie in die Baueinheit 36 der ersten Ventileinrichtung 2 integriert bzw. mit einem eigenen Gehäuse an deren Gehäuse angeflanscht, wie in Fig.1 angedeutet ist. Vor diesem Hintergrund ist die Funktionsweise der Bremseinrichtung 1 wie folgt:
Im ungestörten Betrieb, d.h. bei fahrender Zugfahrzeug-Anhängerkombination ("Drive-Funktion") befinden sich das Shunting-Ventil 18 und das Parking-Ventil 30 in den in Fig.1 und Fig.2 gezeigten Schaltstellungen, in welchen der am Kupplungskopf "Vorrat" 28 anstehende, vom Zugfahrzeug herangeführte Vorratsdruck durch das Shunting-Ventil 18 und das Parking-Ventil 30 hindurch bis zu einem Eingang 46 des Druckregelmoduls 38 gesteuert wird, um den Federspeicherbremszylinder 6b der Hinterachse zu belüften und die Federspeicherbremse entsprechend gelöst zu halten. Dabei hält der Vorratsdruck am Steuereingang 22 des Shunting-Ventils 18 dieses in seiner gezeigten Schaltstellung. Denn das Shunting-Ventil 18 ist derart ausgebildet, dass es gegen den einen bestimmten Grenzwert übersteigenden, an seinem Steuereingang 22 anstehenden Steuerdruck durch den Schalter 20 nicht in seine weitere Schaltstellung geschaltet werden kann.

Die Betriebsbremszylinder 6a der Hinterachse können dagegen weiterhin unabhängig von den Federspeicherbremszylindern 6b durch das Druckregelmodul 38 betätigt werden, um die gekuppelte Zugfahrzeug-Anhängerkombination einzubremsen.

Der Ausgang 26 des Shunting-Ventils 18 ist über eine pneumatische Steuerleitung 48 mit dem Steuereingang 10 des einen 3/2-Wegeventils 12 der zweiten Ventileinrichtung 4 und der Ausgang 50 des Parking-Ventils 30 über eine weitere pneumatische Steuerleitung 52 mit dem Steuereingang 14 des weiteren 3/2-Wegeventils 16 der zweiten Ventileinrichtung 4 verbunden.

Dadurch wird der über den Kupplungskopf "Vorrat" 28 in die erste Ventileinrichtung 2 eingesteuerte Vorratsdruck an die Steuereingänge 10, 14 des einen 3/2-Wegeventils 12 und des weiteren 3/2-Wegeventils 16 weiter gesteuert, wodurch diese die in Fig.1 gezeigten Schaltstellungen einnehmen, in welchen der Betriebsbremszylinder 8 an der Vorderachse direkt oder über ein ABS-Ventil 54 mit dem Kupplungskopf "Bremse" 40 in Verbindung steht. Dadurch wird der über den Kupplungskopf "Bremse" 40 eingesteuerte, im Zugfahrzeug erzeugte Bremsdruck in das ABS-Ventil 54 und von dort im Schlupffall mittels rad- oder achsindividuellem Drucksenken oder Druckhalten an den Betriebsbremszylinder 8 der Vorderachse weiter geleitet.

Nachdem die Zugfahrzeug-Anhängerkombination zum Abstellen mit der aktiven Betriebsbremse und/oder mit der Feststellbremse des Zugfahrzeugs abgebremst worden ist, kann die Parkbremse des Anhängerfahrzeugs bei noch an das Zugfahrzeug angekuppeltem Anhänger zugespannt werden ("Parking-Funktion"). Dazu betätigt der Fahrzeugführer den Schalter 32 des Parking-Ventils 30 und führt es dadurch von der in Fig.1 gezeigten Schaltstellung in seine weitere Schaltstellung über, in welcher es seinen Ausgang 50 und den Eingang 46 des Druckregelmoduls 38 mit seiner Entlüftung 34 verbindet, während sein Eingang 56 abgesperrt wird. Dadurch wird der Federspeicherbremszylinder 6b des Kombizylinders 6 an der Hinterachse entlüftet und damit zugespannt. Der abgesperrte Eingang 56 des Parking-Ventils 30 verhindert, dass der am Kupplungskopf "Vorrat" 28 noch anstehende Vorratsdruck ausströmen kann.

Falls der Fahrer die Betriebsbremse betätigt, wird der Betriebsbremszylinder 6a des Kombizylinders 6 an der Hinterachse belüftet oder wenn eine Bremskraftadditions-Verhinderungseinrichtung vorhanden ist, eine Belüftung des Betriebsbremszylinders 6a des Kombizylinders 6 von der Bremskraftadditions-Verhinderungseinrichtung verhindert.

Wird hingegen der durch die Betriebsbremse in den Stillstand eingebremste Anhänger ohne vorherige Schalterbetätigung des Parking-Ventils 30 vom Zugfahrzeug abgekuppelt, sinkt der Druck am Kupplungskopf "Vorrat" 28 rapide ab. Auf die Schaltstellungen des Shunting-Ventils 18 bzw. des Parking-Ventils 30 hat dieser Druckabfall keinen Einfluss, zum einen, weil das Shunting-Ventil 18 zum Umschalten gegen den nun nicht mehr vorhandenen Steuerdruck an seinem Steuereingang 22 erst über seinen Schalter 20 betätigt werden müsste, zum andern, weil das Parking-Ventil 30 in seiner Durchlassstellung nicht umgeschaltet ist und mechanisch festgestellt werden kann. Deshalb sinkt wegen des durchgeschalteten Shunting- bzw. Parking-Ventils 18, 30 auch der Steuerdruck am Eingang 46 des Druckregelmoduls 38 sowie in den Steuerleitungen 48, 52 zur zweiten Ventileinrichtung 4 ab. Demzufolge spannt zum einen die Federspeicherbremse der Hinterachse zu. Gleichzeitig bewirkt ein niedriger Druck in den Steuerleitungen 48, 52 der zweiten Ventileinrichtung 4, dass die beiden 3/2-Wegeventile 12, 16 umschalten und demzufolge nun Druckluft unter Vorratsdruck aus dem anhängerseitigen Druckluftvorrat 24 durch das durchgeschaltete eine 3/2-Wegeventil 12 und das durchgeschaltete weitere 3/2-Wegeventil 16 der zweiten Ventileinrichtung 4 an das ABS-Ventil 54 weiter geschaltet und von dort in den Betriebsbremszylinder 8 der Vorderachse eingesteuert wird, woraufhin dort die Betriebsbremse an der Vorderachse zuspannt. Das Anhängerfahrzeug wird folglich bei vom Zugfahrzeug abgerissener Druckluftversorgung bzw. in vom Zugfahrzeug abgekuppelten Zustand von der eingebremsten Federspeicherbremse der Hinterachse und von der eingebremsten Betriebsbremse der Vorderachse automatisch abgebremst bzw. im eingebremsten Zustand gehalten.

Das oben beschriebene Zuspannen der Federspeicherbremse 6b der Hinterachse und der Betriebsbremse 8 der Vorderachse bei nicht mehr mit ausreichendem Druck versorgtem Kupplungskopf "Vorrat" 28 tritt also auch dann ein, wenn es zu einem Abriss der Schlauchverbindung oder zu einem Leck in der Schlauchverbindung zwischen dem Kupplungskopf "Vorrat" des Zugfahrzeugs und dem Kupplungskopf "Vorrat" 28 des Anhängerfahrzeugs kommt, weil dann auch der Druck am Kupplungskopf "Vorrat" 28 des Anhängerfahrzeugs rapide sinkt ("Abriss-Funktion"). Dafür ist ein hier nicht explizit gezeigtes Abriss-Ventil in dem Druckregelmodul 38 integriert. Damit wird die vom Gesetzgeber geforderte automatische Einbremsung des Anhängers bei einem Schlauchabriss oder einer Leckage erfüllt.

Die Flächen der Steuerkolben der Ventile 12 und 16, an welchen die durch die Anschlüsse 10 und 14 eingesteuerten Steuerdrücke wirken und die Federkräfte, welche die Ventile 12 und 16 gegen den fallenden Steuerdruck an den Steueranschlüssen 10 und 14 umschalten, sind zweckmäßig so bestimmt, dass das Umschalten der beiden Ventile 12, 16 mit der Aktivierung und Deaktivierung der Abriss-Funktion harmonisiert ist.

Wenn es wünschenswert ist, den abgestellten und eingebremsten Anhänger durch ein Fahrzeug ohne Druckluftversorgung, beispielsweise durch einen Gabelstapler zu verfahren bzw. zu rangieren (Shunting-Funktion), muss die Federspeicherbremse 6b der Kombizylinder 6 an der Hinterachse und die Betriebsbremse 8 an der Vorderachse gelöst werden.

Dazu betätigt eine Bedienperson den Schalter 20 des Shunting-Ventils 18 gegen den wegen des offenen Kupplungskopfes "Vorrat" 28 nun niedrigen Steuerdruck an seinem Steuereingang 22, wodurch es umgeschaltet wird und Druckluft vom anhängerseitigen Druckluftvorrat 24 durch das gemäß Fig.1 durchgeschaltete Parking-Ventil 30 auf den Eingang 46 des Druckregelmoduls 38 der Hinterachse geschaltet wird, woraufhin die Druckluft des anhängerfahrzeugseitigen Druckluftvorrats 24 die Federspeicherbremszylinder 6b der Hinterachse belüftet und dadurch die Federspeicherbremse löst.

Dadurch steht auch der Vorratsdruck des anhängerseitigen Druckluftvorrats 24 über die beiden Steuerleitungen 48, 52 an den Steuereingängen 10, 14 der beiden 3/2-Wegeventile 12, 16 an, was bewirkt, dass diese wieder in die in Fig.1 gezeigten Stellungen umschalten, wodurch der Betriebsbremszylinder 8 der Vorderachse über das ABS-Ventil 54, das weitere 3/2-Wegeventil 16 und den Kupplungskopf "Bremse" 40, der aufgrund des abgekuppelten Zustands des Anhängerfahrzeugs offen steht, entlüftet und die bisher als additionale oder zusätzliche Bremse wirkende Betriebbremse der Vorderachse gelöst wird.

Wenn im Rahmen der Ankuppel-Funktion die Bremse an der Vorderachse gelöst werden soll, um den Drehschemel bei zugespannter Feststellbremse an der Hinterachse drehen zu können so ist bei der ersten Ventileinrichtung 2 das Shunting-Ventil 18 zu betätigen und das Parking-Ventil 30 in die Parkposition zu schalten. Dann liefert der anhängerfahrzeugseitige Druckluftvorrat 24 über das Shunting-Ventil 18 Steuerdruck an den Steuereingang 10 des einen 3/2-Wegeventils 12 der zweiten Ventileinrichtung 4, wodurch dieses in seine in Fig.1 gezeigte Entlüftungsstellung schaltet, in der der Eingang 44 des weiteren 3/2-Wegeventils 16 der zweiten Ventileinrichtung 4 mit seiner Entlüftung 42 verbunden ist. Gleichzeitig sorgt das in die Parkstellung geschaltete Parking-Ventil 30 dafür, dass der Steuereingang 14 des weiteren 3/2-Wegeventils 16 über die weitere Steuerleitung 52 mit der Entlüftung 34 des Parking-Ventils 30 verbunden wird, wodurch das weitere 3/2-Wegeventil 16 den Betriebsbremszylinder 8 an seinen Eingang 44 schaltet, welcher dann mit der Entlüftung 42 des einen 3/2-Wegeventils 12 der zweiten Ventileinrichtung 4 verbunden ist, damit der Betriebsbremszylinder 8 der Vorderachse entlüftet wird, um die Betriebsbremse an der Vorderachse zu lösen.

Gleichzeitig sorgt das in seine Entlüftungsstellung geschaltete Parking-Ventil 30 dafür, dass der Eingang 46 des Druckregelmoduls 38 entlüftet wird, so dass der damit ebenfalls entlüftete Federspeicherbremszylinder 6 des Kombizylinders an der Hinterachse zugespannt wird.

Bei dem in Fig.2 gezeigten Ausführungsbeispiel werden für identische oder ähnlich wirkende Bauteile und Baugruppen die gleichen Bezugszeichen verwendet wie bei dem vorangehend beschriebenen Ausführungsbeispiel. Im Unterschied zu diesem sind das eine und das weitere 3/2-Wegemagnetventil 12, 16 der zweiten Ventileinrichtung 4 nicht federbelastet, sondern sie weisen neben dem einen pneumatischen Steuereingang 10, 14 jeweils einen weiteren pneumatischen Steuereingang 58, 60 auf.

Der weitere pneumatische Steuereingang 58 des einen 3/2-Wegemagnetventils 12 der zweiten Ventileinrichtung 4 ist über eine Druckluftleitung 62 mit seinem Eingang 55 verbunden, welcher wiederum mit dem anhängerfahrzeugseitigen Druckluftvorrat 24 in Verbindung steht, so dass an dem weiteren Steuereingang 58 dieses einen 3/2-Wegemagnetventils 12 stets Vorratsdruck ansteht. Darüber hinaus steht der weitere Steuereingang 58 des einen 3/2-Wegeventils 12 der zweiten Ventileinrichtung 4 mit dem Ausgang 26 des Shunting-Ventils 18 der ersten Ventileinrichtung 2 über das Rückschlagventil 43 in Verbindung.

Dann verbindet eine 3/2-Wegeventil 12 der zweiten Ventileinrichtung 4 abhängig von den an seinen Steuereingängen 10, 58 anstehenden Steuerdrücken den Ausgang 26 des Shunting-Ventils 18 der ersten Ventileinrichtung 2 über das Rückschlagventil 43 und den anhängerseitigen Druckluftvorrat 24 mit dem Eingang 44 des weiteren 3/2-Wegeventils 16 der zweiten Ventileinrichtung oder mit seiner Entlüftung 42.

Demgegenüber ist der weitere Steuereingang 60 des weiteren 3/2-Wegeventils 16 der zweiten Ventileinrichtung 4 mit dem Eingang 44 dieses Ventils 16 verbunden. Das weitere 3/2-Wegeventil 16 der zweiten Ventileinrichtung 4 verbindet dann abhängig von den an seinen Steuereingängen 14, 60 anstehenden Steuerdrücken den Betriebsbremszylinder 8 der Vorderachse entweder mit dem Kupplungskopf "Bremse" 40 oder mit seinem Eingang 44. Bei beiden 3/2-Wegeventilen 12, 16 wirkt dann der an dem weiteren Steuereingang 58, 60 anstehende Druck gegen den an dem einen Steuereingang 10, 14 anstehenden Druck.

Die Flächen der Steuerkolben, an welchen die durch die Anschlüsse 10 und 14 einerseits und die Anschlüsse 58 und 60 andererseits eingesteuerten Steuerdrücke wirken, sind zweckmäßig so bestimmt, dass das Umschalten der beiden Ventile 12, 16 mit der Aktivierung und Deaktivierung der Abriss-Funktion harmonisiert ist.

Die Funktionen, welche mit dem Ausführungsbeispiel nach Fig.2 durchgeführt werden können, sind identisch mit denen, welche im Rahmen des Ausführungsbeispiels nach Fig.1 beschrieben wurden. Insbesondere werden das Shunting-Ventil 18 und das Parking-Ventil 30 der ersten Ventileinrichtung 2 wie vorangehend beschrieben geschaltet, um die zweite Ventileinrichtung 4 pneumatisch zu steuern.

### Bezugszahlenliste

- 1: Feststellbremseinrichtung
- 2: erste Ventileinrichtung
- 4: zweite Ventileinrichtung
- 6: Kombizylinder
- 6a: Betriebsbremszylinder
- 6b: Federspeicherbremszylinder
- 8: Betriebsbremszylinder
- 10: Steuereingang
- 12: Ventil
- 14: Steuereingang
- 16: Ventil
- 18: Shunting-Ventil
- 20: Schalter
- 22: Steuereingang
- 24: Druckluftvorrat
- 26: Ausgang
- 28: Kupplungskopf "Vorrat"
- 30: Parking-Ventil
- 32: Schalter
- 34: Entlüftung
- 36: Gehäuse
- 38: Druckregelmodul
- 39a: Betriebsbremsanschluss
- 39b: Feststellbremsanschluss
- 40: Kupplungskopf "Bremse"
- 42: Entlüftung
- 43: Rückschlagventil
- 44: Eingang
- 46: Eingang
- 48: Steuerleitung
- 50: Ausgang
- 52: Steuerleitung
- 54: ABS-Ventil
- 55: Eingang
- 56: Eingang
- 58: Steuereingang
- 60: Steuereingang
- 62: Druckluftleitung

## Patentansprüche

1. Pneumatische Bremseinrichtung (1) eines wenigstens zweiachsigen, eine gelenkte Vorderachse aufweisenden Anhängerfahrzeugs einer Zugfahrzeug-Anhängerkombination mit einer ersten Ventileinrichtung (2) zur Steuerung einer passiven Bremse (6) an einer Hinterachse des Anhängerfahrzeugs und mit einer zweiten Ventileinrichtung (4) zur Steuerung einer aktiven Bremse (8) an einer Vorderachse oder Vorderachsgruppe des Anhängerfahrzeugs, **dadurch gekennzeichnet, dass** die zweite Ventileinrichtung (4) ausschließlich durch pneumatische, wenigstens teilweise von der ersten Ventileinrichtung (2) ausgesteuerte Signale gesteuert wird.

2. Bremseinrichtung nach Anspruch 1, **dadurch gekennzeichnet, dass** die von der ersten Ventileinrichtung (2) ausgesteuerten pneumatischen Signale in wenigstens einen pneumatischen Steuereingang (10) eines Ventils (12) und in wenigstens einen pneumatischen Steuereingang (14) eines weiteren Ventils (16) der zweiten Ventileinrichtung (4) eingesteuert werden.

3. Bremseinrichtung nach Anspruch 2, **dadurch gekennzeichnet, dass** die erste Ventileinrichtung (2) durch Handbedienung schaltbare Ventile (18, 30) zum Durchführen wenigstens einer Parking-Funktion, einer Ankuppel-Funktion und einer Shunting-oder Rangierfunktion beinhaltet.

4. Bremseinrichtung nach Anspruch 3, **dadurch gekennzeichnet, dass** die erste Ventileinrichtung (2) wenigstens ein 3/2-Wegeventil (18) beinhaltet, das abhängig von einem durch ein Handbetätigungsorgan (20) erzeugtes externes Signal und einem an einem Steuereingang (22) anstehenden Druck entweder den Vorratsdruck eines anhängerfahrzeugseitigen Druckluftvorrats (24) an seinen Ausgang (26) und an den Steuereingang (10) des einen Ventils (12) der zweiten Ventileinrichtung (4) durchsteuert oder seinen Ausgang (26) und den Steuereingang (10) des einen Ventils (12) der zweiten Ventileinrichtung (4) mit einem Kupplungskopf "Vorrat" (28) des Anhängerfahrzeugs verbindet.

5. Bremseinrichtung nach Anspruch 4, **dadurch gekennzeichnet, dass** der Steuereingang (22) des einen 3/2-Wegeventils (18) der ersten Ventileinrichtung (2) mit dem Kupplungskopf "Vorrat" (28) in Verbindung steht.

6. Bremseinrichtung nach einem der Ansprüche 3 bis 5, **dadurch gekennzeichnet, dass** die erste Ventileinrichtung (2) weiterhin wenigstens ein weiteres 3/2-Wegeventil (30) beinhaltet, das abhängig von einem durch ein Handbetätigungsorgan (32) erzeugtes weiteres externes Signal den Steuereingang (14) des weiteren Ventils (16) der zweiten Ventileinrichtung (4) mit einer Entlüftung (34) oder diesen Steuereingang (14) mit dem Ausgang (26) des einen 3/2-Wegeventils (18) der ersten Ventileinrichtung (2) verbindet.

7. Bremseinrichtung nach einem der Ansprüche 2 bis 6, **dadurch gekennzeichnet, dass** die zweite Ventileinrichtung (4) derart ausgebildet ist, dass sie abhängig von den an seinen Steuereingängen (10, 14, 58, 60) anstehenden Steuerdrücken
a) für Betriebsbremsungen bei am Zugfahrzeug angekuppeltem Anhänger angesteuert vom Zugfahrzeug einen Kupplungskopf "Bremse" (40) mit dem wenigstens einen Betriebsbremszylinder (8) für die Betriebsbremse an der Vorderachse des Anhängers verbindet,
b) bei einem Druckverlust am Kupplungskopf "Vorrat" (28) den wenigstens einen Betriebsbremszylinder (8) an der Vorderachse mit dem anhängerfahrzeugseitigen Druckluftvorrat (24) verbindet,
c) zum Ankuppeln des Anhängers an das Zugfahrzeug den wenigstens einen Betriebsbremszylinder (8) an der Vorderachse mit einer Drucksenke (40, 42) in Verbindung bringt,
d) zum Rangieren des vom Zugfahrzeug abgekuppelten Anhängers den wenigstens einen Betriebsbremszylinder (8) an der Vorderachse mit dem Kupplungskopf "Bremse" (40) verbindet und dadurch entlüftet.

8. Bremseinrichtung nach Anspruch 7, **dadurch gekennzeichnet, dass** das eine Ventil (12) und das weitere Ventil (16) der zweiten Ventileinrichtung (4) jeweils ein gegen eine Federbelastung druckgesteuertes 3/2-Wegeventil ist.

9. Bremseinrichtung nach Anspruch 8, **dadurch gekennzeichnet, dass** das eine 3/2-Wegeventil (12) der zweiten Ventileinrichtung (4) abhängig von dem an seinem Steuereingang (10) anstehenden Druck entweder den Ausgang (26) des einen 3/2-Wegeventils (18) der ersten Ventileinrichtung (2) und den anhängerseitigen Druckluftvorrat (24) mit einem Eingang (44) des weiteren 3/2-Wegeventils (16) der zweiten Ventileinrichtung (4) verbindet oder den Eingang (44) des weiteren 3/2-Wegeventils (16) der zweiten Ventileinrichtung (4) mit seiner Entlüftung (42).

10. Bremseinrichtung nach Anspruch 9, **dadurch gekennzeichnet, dass** das weitere 3/2-Wegeventil (16) der zweiten Ventileinrichtung (4) abhängig von dem an seinem Steuereingang (14) anstehenden Druck entweder seinen Eingang (44) mit dem Betriebsbremszylinder (8) an der Vorderachse verbindet oder diesen Betriebsbremszylinder (8) mit dem Kupplungskopf "Bremse" (40) des Anhängerfahrzeugs.

11. Bremseinrichtung nach Anspruch 7, **dadurch gekennzeichnet, dass** das eine Ventil (12) und das weitere Ventil (16) der zweiten Ventileinrichtung (4) jeweils ein 3/2-Wegeventil ist, welches einen weiteren Steuereingang (58, 60) aufweist, wobei der an dem weiteren Steuereingang (58, 60) anstehende Druck gegen den an dem einen Steuereingang (10, 14) anstehenden Druck wirkt.

12. Bremseinrichtung nach Anspruch 11, **dadurch gekennzeichnet, dass** der weitere Steuereingang (58) des einen 3/2-Wegeventils (12) der zweiten Ventileinrichtung (4) mit dem anhängerseitigen Druckluftvorrat (24) und der weitere Steuereingang (60) des weiteren 3/2-Wegeventils (16) der zweiten Ventileinrichtung (4) mit einem Eingang (44) des weiteren 3/2-Wegeventils (16) der zweiten Ventileinrichtung (4) in Verbindung steht.

13. Bremseinrichtung nach Anspruch 12, **dadurch gekennzeichnet, dass** das eine 3/2-Wegeventil (12) der zweiten Ventileinrichtung (4) abhängig von den an seinen Steuereingängen (10, 58) anstehenden Steuerdrücken den anhängerseitigen Druckluftvorrat (24) mit einem Eingang (44) des weiteren 3/2-Wegeventils (16) der zweiten Ventileinrichtung (4) verbindet oder den Eingang (44) des weiteren 3/2-Wegeventils (16) der zweiten Ventileinrichtung (4) mit einer Entlüftung (42) verbindet.

14. Bremseinrichtung nach Anspruch 12 und 13, **dadurch gekennzeichnet, dass** das weitere 3/2-Wegeventil (16) der zweiten Ventileinrichtung (4) abhängig von den an seinen Steuereingängen (14, 60) anstehenden Steuerdrücken den Betriebsbremszylinder (8) der Vorderachse entweder mit seinem Eingang (44) oder mit dem Kupplungskopf "Bremse" (40) verbindet.

## Claims

1. Pneumatic braking device (1) of an at least two-axle, steered front axle trailer vehicle of a towing vehicle/trailer combination, comprising a first valve device (2) for controlling a passive brake (6) at a rear axle of the trailer vehicle and a second valve device (4) for controlling an active brake (8) at a front axle or a front axle assembly of the trailer vehicle, **characterised in that** the second valve device (4) is exclusively controlled by pneumatic signals which are at least partially modulated by the first valve device (2).

2. Braking device according to claim 1, **characterised in that** the pneumatic signals modulated by the first valve device (2) are fed into at least one pneumatic control input (10) of a valve (12) and into at least one pneumatic control input (14) of a further valve (16) of the second valve device (4).

3. Braking device according to claim 2, **characterised in that** the first valve device (2) contains valves (18, 30) which are manually switchable for performing at least one parking function, coupling function or shunting function.

4. Braking device according to claim 3, **characterised in that** the first valve device (2) contains at least one 3/2-way valve (18) which, as a function of an external signal generated by a manual actuating element (20) and of a pressure applied to a control input (22), either feeds through the supply pressure of a trailer-side compressed air supply (24) to its output (26) and to the control input (10) of the one valve (12) of the second valve device (4) or connects its output (26) and the control input (10) of the one valve (12) of the second valve device (4) to a "supply" coupling head (28) of the trailer vehicle.

5. Braking device according to claim 4, **characterised in that** the control input (22) of the one 3/2-way valve (18) of the first valve device (2) is connected to the "supply" coupling head (28).

6. Braking device according to any of claims 3 to 5, **characterised in that** the first valve device (2) further contains a second 3/2-way valve (30) which, as a function of a further external signal generated by a manual actuating element (32), connects the control input (14) of the further valve (16) of the second valve device (4) to a vent (34), or connects this control input (14) to the output (26) of the one 3/2-way valve (18) of the first valve device (2).

7. Braking device according to any of claims 3 to 6, **characterised in that** the second valve device (4) is designed such that, as a function of the control pressures applied to its control inputs (10, 14, 58, 60),
a) for service braking operations with the trailer coupled to the towing vehicle, it connects a "brake" coupling head (40) to the at least one service brake cylinder (8) for the service brake at the front axle of the trailer,
b) at a pressure loss at the "supply" coupling head (28), it connects the at least one service brake cylinder (8) at the front axle to the trailer-side compressed air supply (24),
c) for coupling the trailer to the towing vehicle, it connects the at least one service brake cylinder (8) at the front axle to a pressure sink (40, 42),
d) for shunting the trailer uncoupled from the towing vehicle, it connects the at least one service brake cylinder (8) at the front axle to the "brake" coupling head (40), thereby venting it.

8. Braking device according to claim 7, **characterised in that** the one valve (12) and the further valve (16) of the second valve device (4) are 3/2-way valves pressure-controlled against spring loading.

9. Braking device according to claim 8, **characterised in that** the one 3/2-way valve (12) of the second valve device (4), as a function of the pressure applied to its control input (10), either connects the output (26) of the one 3/2-way valve (18) of the first valve device (2) and the trailer-side compressed air supply (24) to an input (44) of the further 3/2-way valve (16) of the second valve device (4) or connects the input (44) of the further 3/2-way valve (16) of the second valve device (4) to its vent (42).

10. Braking device according to claim 9, **characterised in that** the further 3/2-way valve (16) of the second valve device (4), as a function of the pressure applied to its control input (14), either connects its input (44) to the service brake cylinder (8) at the front axle or connects this service brake cylinder (8) to the "brake" coupling head (40) of the trailer vehicle.

11. Braking device according to claim 7, **characterised in that** the one valve (12) and the further valve (16) of the second valve device (4) are 3/2-way valves having a further control input (58, 60), the pressure applied to the further control input (58, 60) acting against the pressure applied to the control input (10, 14).

12. Braking device according to claim 11, **characterised in that** the further control input (58) of the one 3/2-way valve (12) of the second valve device (4) is connected to the trailer-side compressed air supply (24) and the further control input (60) of the further 3/2-way valve (16) of the second valve device (4) is connected to an input (44) of the further 3/2-way valve (16) of the second valve device (4).

13. Braking device according to claim 12, **characterised in that** the one 3/2-way valve (12) of the second valve device (4), as a function of the control pressures applied to its control inputs (10, 58), either connects the trailer-side compressed air supply (24) to an input (44) of the further 3/2-way valve (16) of the second valve device (4) or connects the input (44) of the further 3/2-way valve (16) of the second valve device (4) to a vent (42).

14. Braking device according to claims 12 and 13, **characterised in that** the further 3/2-way valve (16) of the second valve device (4), as a function of the control pressures applied to its control inputs (14, 60), connects the service brake cylinder (8) at the front axle either to its input (44) or to the "brake" coupling head (40).

## Revendications

1. Dispositif (1) de freinage pneumatique d'un véhicule à remorque à au moins deux essieux, ayant un essieu avant directeur, d'une combinaison véhicule de traction-remorque, comprenant un dispositif (2) de soupape pour commander un frein (6) passif sur un essieu arrière du véhicule à remorque et comprenant un deuxième dispositif (4) de soupape pour commander un frein (8) actif sur un essieu avant ou un groupe d'essieux avant du véhicule à remorque, **caractérisé en ce que** le deuxième dispositif (4) de soupape est commandé exclusivement par des signaux pneumatiques réglés, au moins en partie, par le premier dispositif (2) de soupape.

2. Dispositif de freinage suivant la revendication 1, **caractérisé en ce que** les signaux pneumatiques réglés par le premier dispositif (2) de soupape sont entrés dans au moins une entrée (10) pneumatique de commande d'une soupape (12) et dans au moins une entrée (14) pneumatique de commande d'une autre soupape (16) du deuxième dispositif (4) de soupape.

3. Dispositif de freinage suivant la revendication 2, **caractérisé en ce que** le premier dispositif (2) de soupape comporte des soupapes (18, 30), manoeuvrables à la main, pour effectuer au moins une fonction de stationnement, une fonction d'attelage et une fonction de shunting ou de manoeuvre.

4. Dispositif de freinage suivant la revendication 3, **caractérisé en ce que** le premier dispositif (2) de soupape comporte au moins une soupape (18) à 3/2 voies, qui, en fonction d'un signal extérieur produit par l'organe (20) d'actionnement manuel et d'une pression régnant sur une entrée (22) de commande, applique soit la pression d'un réservoir (24) à air comprimé, du côté du véhicule à remorque à sa sortie (26) et à l'entrée (10) de commande de la une soupape (12) du deuxième dispositif (4) de soupape, ou relie sa sortie (26) et l'entrée (10) de commande de la une soupape (12) du deuxième dispositif (4) à soupape à une tête d'attelage "réservoir" (28) du véhicule à remorque.

5. Dispositif de freinage suivant la revendication 4, **caractérisé en ce que** l'entrée (22) de commande de la une soupape (18) à 3/2 voies du premier dispositif (2) de soupape est en liaison avec la tête d'attelage "réservoir" (28).

6. Dispositif de freinage suivant l'une des revendications 3 à 6, **caractérisé en ce que** le premier dispositif (2) de soupape comporte en outre au moins une autre soupape (30) à 3/2 voies, qui, en fonction d'un autre signal extérieur produit par l'organe (32) d'actionnement manuel, relie l'entrée (14) de commande de l'autre soupape (16) du deuxième dispositif (4) de soupape à une mise à l'atmosphère (34) ou cette entrée (14) de commande à la sortie (26) de la une soupape (18) à 3/2 voies du premier dispositif (2) de soupape.

7. Dispositif de freinage suivant l'une des revendications 2 à 6, **caractérisé en ce que** le deuxième dispositif (4) de soupape est constitué de manière à ce que, en fonction des pressions de commande régnant à ses entrées (10, 14, 58, 60) de commande
a) pour des freinages de service à la remorque attelée au véhicule de traction commandés par le véhicule de traction, relie une tête d'attelage "frein" (40) au au moins un cylindre (8) de frein de service pour le frein de service sur l'essieu avant de la remorque,
b) pour une perte de pression à la tête d'attelage "réservoir" (28), relie le au moins un cylindre (8) de frein de service sur l'essieu avant au réservoir (24) d'air comprimé du côté du véhicule à remorque,
c) pour l'attelage de la remorque au véhicule de traction, met en liaison le au moins un cylindre (8) de frein de service sur l'essieu avant avec un puits (40, 42) de pression,
d) pour la manoeuvre de la remorque dételée du véhicule de traction, relie le au moins un cylindre (8) de frein de service sur l'essieu avant à la tête d'attelage "frein" (40) et ainsi le met à l'atmosphère.

8. Dispositif de freinage suivant la revendication 7, **caractérisé en ce que** la une soupape (12) et l'autre soupape (16) du deuxième dispositif (4) de soupape sont chacune une soupape à 3/2 voies commandée en pression à l'encontre de la charge d'un ressort.

9. Dispositif de freinage suivant la revendication 8, **caractérisé en ce que** la une soupape (12) à 3/2 voies du deuxième dispositif (4) de soupape relie, en fonction de la pression régnant à sa deuxième entrée (10) de commande, soit la sortie (26) de la une soupape (18) à 3/2 du premier dispositif (2) de soupape et le réservoir (24) d'air comprimé du côté de la remorque à une entrée (44) de l'autre soupape (16) à 3/2 voies du deuxième dispositif (4) de soupape soit l'entrée (44) de l'autre soupape (16) à 3/2 voies du deuxième dispositif (4) de soupape à sa mise à l'atmosphère (42).

10. Dispositif de freinage suivant la revendication 9, **caractérisé en ce que** l'autre soupape (16) à 3/2 voies du deuxième dispositif (4) de soupape relie, en fonction de la pression régnant à son entrée (14) de commande, soit son entrée (44) au cylindre (8) de frein de service sur l'essieu avant, soit ce cylindre (8) de frein de service à la tête d'attelage "frein" (40) du véhicule à remorque.

11. Dispositif de freinage suivant la revendication 7, **caractérisé en ce que** la une soupape (12) et l'autre soupape (16) du deuxième dispositif (4) de soupape sont chacune une soupape à 3/2 voies, qui a une autre entrée (58, 60) de commande, la pression régnant à l'autre entrée (58, 60) de commande agissant à l'encontre de la pression régnant à la une entrée (10, 14) de commande.

12. Dispositif de freinage suivant la revendication 11, **caractérisé en ce que** l'autre entrée (58) de commande de la une soupape (12) à 3/2 voies du deuxième dispositif (4) de soupape est en liaison avec le réservoir (24) d'air comprimé du côté de la remorque et l'autre entrée (60) de commande de l'autre soupape (16) à 3/2 voies du deuxième dispositif (4) de soupape avec une entrée (44) de l'autre soupape (16) à 3/2 voies du deuxième dispositif (4) de soupape.

13. Dispositif de freinage suivant la revendication 12, **caractérisé en ce qu'**une soupape (12) à 3/2 voies du deuxième dispositif (4) de soupape relie, en fonction des pressions de commande régnant à ses entrées (10, 58) de commande, le réservoir (24) d'air comprimé du côté de la remorque à une entrée (44) de l'autre soupape (16) à 3/2 voies du deuxième dispositif (4) de soupape ou relie l'entrée (44) de l'autre soupape (16) à 3/2 voies du deuxième dispositif (4) de soupape à une mise à l'atmosphère (42).

14. Dispositif de freinage suivant les revendications 12 et 13, **caractérisé en ce que** l'autre soupape (16) à 3/2 voies du deuxième dispositif (4) de soupape relie, en fonction des pressions de commande régnant à ses entrées (14, 60) de commande, le cylindre (8) de frein de service de l'essieu avant, soit à son entrée (44), soit à la tête d'attelage "frein" (40).
